# FASCICULE DE BREVET EUROPEEN

(11) **EP 2 154 119 B1**
(45) Date de publication et mention de la délivrance du brevet: **23.01.2013**
(21) Numéro de dépôt: 09165172.9
(22) Date de dépôt: 10.07.2009
(51) Int. Cl.: C04B 35/80, C04B 41/45, B32B 5/02

(54) **Procédé de fabrication d'une pièce en matériau composite thermostructural et pièce ainsi obtenue**
Verfahren zur Herstellung eines thermostrukturellen Verbundwerkstoffteils, und so erhaltenes Teil
Method of producing a part from a thermostructural composite material and part thus obtained

(30) Priorité: 21.07.2008 FR 0854937
(43) Date de publication de la demande: 17.02.2010
(73) Titulaire: HERAKLES, 33185 Le Haillan (FR)
(72) Inventeur: Philippe, Eric, 33700 Merignac (FR); Bouillon, Eric, 33185 Le Haillan (FR)
(74) Mandataire: Joly, Jean-Jacques

(56) Documents cités:
- EP-A- 0 451 043
- US-A- 5 738 951

## Description

### Arrière-plan de l'invention

L'invention concerne la fabrication de pièces en matériau composite thermostructural. Un domaine d'application de l'invention est la réalisation de pièces structurales de moteurs ou ensembles propulsifs utilisés dans les domaines aéronautique et spatial.

Les matériaux composites thermostructuraux sont remarquables par leurs propriétés mécaniques et leur capacité à conserver ces propriétés mécaniques à des températures élevées.

Des matériaux composites thermostructuraux bien connus sont les matériaux composites carbone/carbone, ou C/C, comprenant un renfort en fibres de carbone densifié par une matrice en carbone et les matériaux composites à matrice céramique, ou CMC, comportant un renfort fibreux en fibres réfractaires (carbone ou céramique) densifié par une matrice en céramique ou au moins essentiellement en céramique.

Dans un matériau CMC, il est bien connu que la présence d'une interphase de défragilisation interposée entre les fibres du renfort fibreux et la matrice permet de diminuer fortement la sensibilité à la fissuration et d'accroître la résistance aux chocs. L'interphase est en un matériau capable d'assurer une relaxation des contraintes au fond de fissures qui parviennent à l'interphase à travers la matrice et d'éviter ou retarder une propagation des fissures à travers les fibres avec rupture de celles-ci, rendant ainsi le matériau CMC moins fragile. Le matériau constitutif de l'interphase est par exemple du carbone pyrolytique (PyC) ou du nitrure de bore (BN) déposé sur les fibres du renfort fibreux par infiltration chimique en phase gazeuse ou CVI ("Chemical Vapor Infiltration"), comme décrit notamment dans le document US 4 752 503. Un autre matériau convenant pour une interphase de défragilisation est le carbone dopé au bore (BC).

Dans un matériau C/C, la présence d'une interphase autre qu'en carbone entre fibres du renfort fibreux et matrice carbone peut aussi être utile notamment pour améliorer la tenue à l'oxydation, par exemple si l'on utilise une interphase contenant du bore, telle que BN ou BC.

Par ailleurs, pour la réalisation d'une pièce en matériau composite thermostructural de forme complexe, il est connu de réaliser d'abord une préforme fibreuse, destinée à constituer le renfort fibreux de la pièce, par mise en forme d'une structure fibreuse et maintien dans la forme voulue par consolidation. La consolidation consiste en une densification partielle de la préforme fibreuse par une phase de matrice consolidante, cette densification partielle étant réalisée de façon suffisante, de préférence juste suffisante, pour que la préforme puisse être manipulée en conservant sa forme sans assistance d'un outillage de maintien. Ainsi, la densification de la préforme consolidée peut être poursuivie sans nécessiter d'outillage, ce qui est particulièrement avantageux notamment lorsque cette densification est poursuivie par CVI dans un four, les outillages occupant sinon une fraction importante du volume utile du four.

La consolidation de la préforme fibreuse peut être réalisée par CVI. La préforme maintenue dans la forme voulue par un outillage est alors placée dans un four où l'on peut successivement former un revêtement d'interphase sur les fibres et réaliser la consolidation par densification partielle. On retrouve alors l'inconvénient précité de l'occupation de l'espace utile du four par un outillage. En outre, comme cela est bien connu, les processus CVI sont longs, même s'il s'agit d'une densification partielle.

Il y a donc avantage à réaliser une consolidation par voie liquide en mettant en forme la préforme fibreuse à partir d'une texture fibreuse imprégnée par une composition de consolidation liquide contenant une résine précurseur de phase de matrice consolidante carbone ou céramique, la résine étant ensuite transformée en un résidu solide carbone ou céramique par pyrolyse. Toutefois, la formation préalable sur les fibres de la texture fibreuse d'un revêtement d'interphase ayant une épaisseur suffisante pour assurer la fonction de défragilisation affecte fortement la capacité de déformation de la structure fibreuse, ce qui peut rendre impossible la mise dans la forme voulue de la préforme fibreuse, notamment lorsque la pièce à réaliser a une forme relativement complexe.

Pour résoudre cette difficulté, il a été proposé dans le document US 5 486 379 de mettre en place une interphase après consolidation de la préforme fibreuse par voie liquide et avant la poursuite de la densification. Toutefois, du fait de la présence de la phase consolidante, la formation d'une interphase continue sur les fibres de la préforme fibreuse ne peut être garantie, notamment lorsque le résidu solide de pyrolyse de la résine de consolidation adhère fortement aux fibres, ce qui est le cas par exemple avec un résidu de pyrolyse de résine précurseur de carbone de silicium (SiC) et des fibres en SiC.

On connaît par ailleurs du document EP 0 451 043 un procédé comprenant l'utilisation de tissu formé de fils en fibres revêtues d'un ensimage et l'imprégnation du tissu par un précurseur liquide de carbone. Après mise en forme de strates de tissu dans un outillage, on réalise un traitement thermique qui transforme l'ensimage en une première interphase carbone formée sur les fibres et le précurseur liquide en une deuxième interphase discontinue autour des fils et une densification par une matrice céramique qui se forme dans les fils entre la première interphase et la deuxième interphase et autour de celle-ci, la première interphase formant une interphase fibres/matrice et la deuxième interphase formant une interphase matrice/matrice. La densification par la matrice peut être poursuivie en alternant phases de matrice et couches d'interphase matrice/matrice.

### Objets et résumé de l'invention

L'invention a pour objet de fournir un procédé permettant la réalisation d'une pièce en matériau composite thermostructural pouvant avoir une forme complexe, par mise en forme et consolidation par voie liquide d'une préforme fibreuse, tout en assurant la présence d'une interphase continue entre fibres et matrice.

Ce but est atteint grâce à un procédé comprenant les étapes successives suivantes :
- formation par infiltration chimique en phase gazeuse d'une première couche d'interphase continue sur les fibres d'une structure fibreuse en fibres réfractaires, la première couche d'interphase ayant une épaisseur au plus égale à 100 nanomètres,
- formation d'une préforme fibreuse consolidée par mise en forme de la structure fibreuse munie de la première couche d'interphase et imprégnée par une composition de consolidation comportant une résine précurseur de carbone ou céramique, et réticulation de la résine,
- transformation par pyrolyse de la résine en un résidu solide discontinu formé de grains en carbone ou céramique,
- formation ensuite par infiltration chimique en phase gazeuse d'une deuxième couche d'interphase continue recouvrant la première couche d'interphase et les grains de résidu solide de pyrolyse, et
- densification ensuite de la préforme par une matrice réfractaire.

On garantit ainsi la présence d'une interphase continue et suffisante entre les fibres et la matrice tout en préservant la déformabilité de la structure fibreuse à partir de laquelle la préforme est formée.

De préférence, la première couche de l'interphase est en un matériau choisi parmi le carbone pyrolytique, le nitrure de bore et le carbone dopé au bore. Il peut en être de même pour la deuxième couche de l'interphase, les matériaux de la première et de la deuxième couche de l'interphase n'étant pas nécessairement les mêmes. La deuxième interphase peut en variante être réalisée sous forme séquencée en alternant des couches défragilisantes par exemple en PyC, BN ou BC avec des couches céramiques, par exemple en SiC. La réalisation d'interphases séquencées est décrite notamment dans le document US 5 738 951.

Avantageusement, la première couche de l'interphase a une épaisseur au plus égale à 50 nanomètres.

De préférence, la première couche de l'interphase a une épaisseur au moins égale à 10 nanomètres.

L'épaisseur de la deuxième couche de l'interphase est quant à elle de préférence au moins égale à 100 nanomètres.

Selon un mode particulier de réalisation du procédé, la transformation par pyrolyse en résidu solide carbone ou céramique et la formation de la deuxième couche de l'interphase sont réalisées de façon enchaînée dans un four.

L'invention a aussi pour objet une pièce en matériau composite thermostructural telle qu'elle peut être obtenue par le procédé ci-avant.

Selon l'invention, dans une telle pièce comportant un renfort fibreux en fibres réfractaires densifié par une matrice réfractaire obtenue par infiltration chimique en phase gazeuse avec interposition d'une interphase entre les fibres du renfort fibreux et la matrice, l'interphase comprend une première couche d'interphase continue revêtant les fibres du renfort fibreux et ayant une épaisseur au plus égale à 100 nanomètres et une deuxième couche d'interphase continue, la deuxième couche d'interphase recouvrant directement la première couche d'interphase et des grains de résidu solide discontinu de pyrolyse de résine en carbone ou céramique interposés entre la première et la deuxième couche d'interphase.

De préférence, la première couche d'interphase est en un matériau choisi parmi le carbone pyrolytique PyC, le nitrure de bore BN et le carbone dopé au bore BC. La deuxième interphase peut également être en un matériau choisi parmi PyC, BN et BC, les matériaux des deux couches d'interphase n'étant pas nécessairement les mêmes. La deuxième interphase peut en variante être une interphase séquencée formée par une succession de couches alternativement en un matériau défragilisant, par exemple PyC, BN ou BC et en un matériau céramique, par exemple SiC.

La première couche d'interphase peut avoir une épaisseur au plus égale à 50 nanomètres et a de préférence une épaisseur au moins égale à 10 nanomètres, tandis que la deuxième couche d'interphase a une épaisseur de préférence au moins égale à 100 nanomètres.

La pièce en matériau composite peut être notamment une pièce en matériau CMC, les grains de résidu solide de pyrolyse et la matrice étant en céramique.

### Brève description des dessins

L'invention sera mieux comprise à la lecture de la description faite ci-après, à titre indicatif mais non limitatif en référence aux dessins annexés sur lesquels :

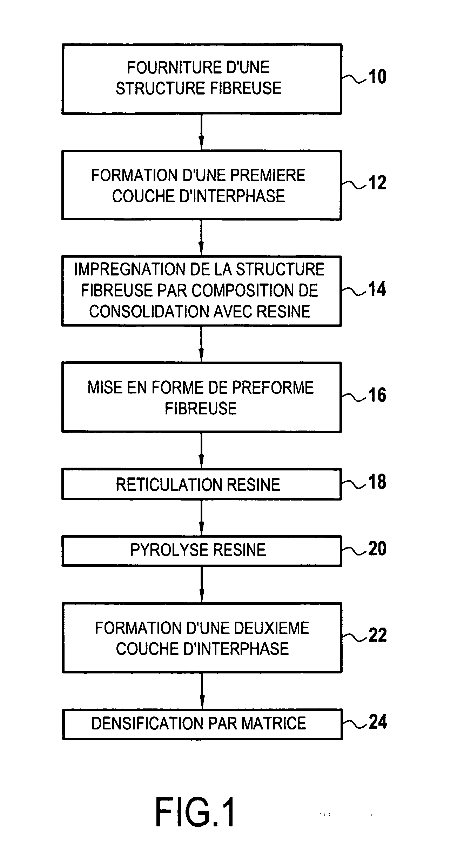

- la figure 1 montre des étapes successives d'un mode de mise en oeuvre d'un procédé conforme à l'invention ;
- la figure 2 est une vue très schématique montrant la formation d'interphase et de matrice sur une fibre dans une pièce en matériau composite obtenue conformément à l'invention ; et
- la figure 3 montre des courbes illustrant la tenue à l'allongement d'échantillons de matériaux composites obtenus conformément à l'invention et conformément à l'art antérieur.

### Description détaillée de modes de réalisation

Une première étape (10) du procédé consiste à fournir une structure fibreuse à partir de laquelle sera formée une préforme fibreuse convenant pour la réalisation d'une pièce en matériau composite de forme donnée.

La structure fibreuse peut être sous différentes formes, telles que :
- tissu bidimensionnel (2D),
- tissu tridimensionnel (3D) obtenu par tissage 3D ou multicouches,
- tresse,
- tricot,
- feutre,
- nappe unidirectionnelle (UD) de fils ou câbles ou nappe multidirectionnelle (nD) obtenue par superposition de plusieurs nappes UD dans des directions différentes et liaison des nappes UD entre elles par exemple par couture, par agent de liaison chimique ou par aiguilletage.

On peut aussi utiliser une structure fibreuse formée de plusieurs couches superposées de tissu, tresse, tricot, feutre, nappes ou autres, lesquelles couches sont liées entre elles par exemple par couture, par implantation de fils ou d'éléments rigides ou par aiguilletage.

Les fibres constitutives de la structure fibreuse sont des fibres réfractaires, c'est-à-dire des fibres en céramique, par exemple en carbure de silicium (SiC), des fibres en carbone ou même encore des fibres en un oxyde réfractaire, par exemple en alumine (Al₂O₃).

A l'étape 12, une première couche d'interphase d'épaisseur réduite est formée sur les fibres de la structure fibreuse. Afin de préserver la déformabilité de la structure fibreuse, l'épaisseur de la première couche d'interphase est choisie au plus égale à 100 nanomètres (nm), de préférence au plus égale à 50 nm. Afin de préserver la fonction de la première couche d'interphase exposée en détail plus loin, l'épaisseur est de préférence au moins égale à 10 nm.

Le matériau de la première couche d'interphase est avantageusement choisi parmi le carbone pyrolytique (PyC), le nitrure de bore (BN) et le carbone dopé au bore (BC). La première couche d'interphase est formée par dépôt chimique en phase gazeuse ou CVI. Des processus de formation de dépôt de PyC, BN ou BC par CVI sont connus. Pour le dépôt de PyC ou BN, ou pourra se référer au document US 4 752 503 déjà cité. Pour le dépôt par CVI de BC, c'est-à-dire un système comprenant environ 5% à 20% de B et le complément en C, on peut utiliser une phase gazeuse réactionnelle contenant un mélange de trichlorure de bore (BCl₃) précurseur de B, de propane (C₃H₈) précurseur de C et de gaz hydrogène (H₂) formant réducteur et gaz de dilution, comme décrit notamment dans le document US 6 068 930.

Après formation de la première couche d'interphase, la structure fibreuse est imprégnée (étape 14) par une composition liquide contenant une résine de consolidation précurseur de carbone ou céramique. A cet effet, la structure fibreuse est immergée dans un bain contenant la résine et habituellement un solvant de celle-ci. Après égouttage, un séchage est réalisé en étuve. Le séchage peut être accompagné d'une pré-réticulation ou réticulation partielle de la résine. Une telle pré-réticulation apportant une raideur supplémentaire, elle doit, si elle est réalisée, rester limitée pour préserver une déformabilité suffisante de la structure fibreuse sur laquelle la première couche d'interphase a déjà été formée.

D'autres techniques connues d'imprégnation peuvent être utilisées telles que préparation d'un pré-imprégné par passage de la structure fibreuse dans une imprégnatrice en continu, imprégnation par infusion, ou encore imprégnation par RTM ("Resin Transfer Moulding").

La résine de consolidation est choisie pour laisser, après pyrolyse, un résidu carbone ou céramique suffisant pour assurer la consolidation de la préforme fibreuse réalisée ensuite.

Une résine précurseur de carbone peut être choisie parmi les résines phénoliques et époxydes.

Une résine précurseur de céramique peut être par exemple une résine polycarbosilane précurseur de carbure de silicium (SiC), ou une résine polysiloxane précurseur de SiCO, ou une résine polyborocarbosilazane précurseur de SiCNB.

Après imprégnation, une préforme fibreuse destinée à constituer le renfort fibreux de la pièce à réaliser, et ayant une forme correspondant sensiblement à celle de cette pièce, est obtenue par conformation de la structure fibreuse à l'aide d'un outillage de maintien (étape 16).

La conformation de la structure fibreuse peut comporter des opérations de drapage de la structure fibreuse ou de strates ou panneaux découpés dans la structure fibreuse. Des découpes ou incisions peuvent être pratiquées pour faciliter le drapage si la déformation nécessaire est relativement importante.

La conformation de la structure fibreuse peut aussi comporter des opérations de pliage de parties de la structure fibreuse, par exemple des parties situées de part et d'autre de zones de déliaison aménagées lors de la réalisation de la structure fibreuse ou de part et d'autre de découpes pratiquées dans la structure fibreuse.

L'outillage de maintien peut être constitué par un moule et un contre-moule rigides entre lesquels la préforme fibreuse est mise en forme.

L'outillage de maintien peut aussi être constitué par un mandrin ou forme et une enveloppe externe éventuellement souple, la structure fibreuse ou des strates de structure fibreuse étant conformées par drapage sur le mandrin avant application de l'enveloppe externe.

La mise en forme de la préforme fibreuse peut être accompagnée d'une compression de la structure fibreuse afin d'obtenir un taux volumique de fibres relativement élevé dans le matériau composite de la pièce à réaliser, si désiré.

Après mise en forme de la préforme, la réticulation de la résine est réalisée, ou achevée s'il y a eu pré-réticulation (étape 18), la préforme étant dans l'outillage de maintien.

Ensuite, un traitement thermique de pyrolyse de la résine est effectué (étape 20).

La pyrolyse est réalisée à une température par exemple d'environ 900°C à 1000°C. Avantageusement, après extraction hors de l'outillage de maintien de la préforme consolidée par la résine réticulée, la pyrolyse est effectuée dans le four utilisé pour la formation de la deuxième couche d'interphase lorsque celle-ci est obtenue par CVI (voir ci-après), pendant la montée en température précédant la formation effective de cette deuxième couche d'interphase.

A l'étape 22, une deuxième couche d'interphase est formée sur la préforme fibreuse consolidée, la deuxième couche d'interphase recouvrant la première couche d'interphase et les grains de résidu solide discontinu en carbone ou céramique résultant de la pyrolyse de la résine.

Afin d'assurer la fonction recherchée, la deuxième couche d'interphase a une épaisseur de préférence au moins égale à 100 nm.

Le matériau de la deuxième couche d'interphase peut être choisi parmi PyC, BN et BC, étant noté qu'il peut alors être différent de celui de la première couche d'interphase. En variante, on peut former une deuxième couche d'interphase séquencée en alternant le dépôt de couches élémentaires de matériau d'interphase défragilisant tel que PyC, BN ou BC et le dépôt de couches élémentaires de matériau céramique tel que SiC, chaque couche élémentaire ayant une très faible épaisseur, par exemple inférieure à 10 nm, comme décrit dans le document US 5 738 951 déjà mentionné. La deuxième couche d'interphase est formée par CVI.

Après formation de la deuxième couche d'interphase, la densification de la préforme fibreuse par une matrice est poursuivie (étape 24).

La densification est avantageusement réalisée par CVI, de préférence de façon enchaînée après la formation de la deuxième couche d'interphase, les paramètres du processus CVI et la nature de la phase gazeuse réactionnelle étant adaptés à la nature de la matrice à former. On peut ainsi enchaîner dans le même four les opérations de pyrolyse de la résine de consolidation, formation de la deuxième couche d'interphase et densification.

En variante, la densification pourrait être réalisée par voie liquide, c'est-à-dire par imprégnation de la préforme par une composition liquide contenant un précurseur de la matrice à former, typiquement une résine précurseur de céramique ou de carbone. L'imprégnation est suivie d'une réticulation de la résine et d'une pyrolyse pour obtenir le résidu carbone ou céramique souhaité, le cycle imprégnation, réticulation, pyrolyse pouvant être répété plusieurs fois.

La matrice formée par CVI peut être une matrice céramique, par exemple en SiC, ou une matrice au moins en partie auto-cicatrisante, telle qu'une matrice silicium-bore-carbone (Si-B-C) ou une matrice carbure de bore (B₄C) ou encore une matrice séquencée avec des phases de matrices alternées en céramique non cicatrisante et en céramique cicatrisante. On pourra se référer notamment aux documents FR 2 401 888, US 5 246 736, US 5 965 266, US 6 068 930 et US 6 291 058.

La matrice formée par CVI peut être une matrice en carbone, la réalisation de matrice carbone par CVI étant bien connue.

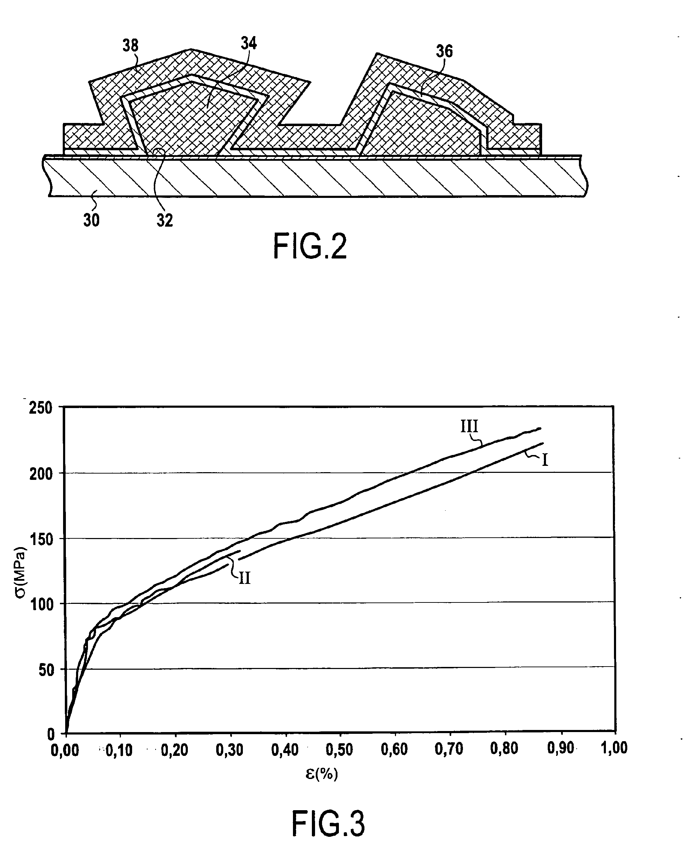

Comme le montre très schématiquement la figure 2, on obtient alors une pièce en matériau composite dans lequel chaque fibre 30 est revêtue de façon continue par une première couche d'interphase continue 32 de relativement faible épaisseur, les grains de carbone ou céramique formant la phase consolidante discontinue 34 constituée par le résidu solide de la pyrolyse de la résine de consolidation étant interposés entre la première couche d'interphase 32 et la deuxième couche d'interphase continue 36. La matrice 38 obtenue par CVI recouvre la deuxième couche d'interphase.

Lorsque les fibres 10 et la phase consolidante 34 sont en céramique, la première couche d'interphase 32 a pour fonction d'éviter une trop forte adhérence de la phase consolidante sur les fibres, source de fragilité du matériau composite, notamment dans le cas d'une phase consolidante et de fibres en SiC.

Lorsque les fibres 10 sont en carbone et la phase consolidante 34 est en céramique ou carbone, la première couche d'interphase 32 facilite un accrochage de la phase consolidante sur les fibres.

L'épaisseur de la deuxième couche d'interphase 36 est au minimum égale à 100 nm, mais peut être plus ou moins grande selon la nature de la matrice 38.

Ainsi, dans le cas de fibres en céramique, notamment en SiC et de matrice céramique, non cicatrisante (par exemple SiC) ou cicatrisante, une épaisseur de la deuxième couche d'interphase de 100 nm à quelques centaines de nm peut être suffisante pour assurer la fonction de défragilisation souhaitée.

Dans le cas de fibres de carbone et de matrice céramique non cicatrisante ou cicatrisante, l'épaisseur de la deuxième couche d'interphase 36 peut atteindre voire dépasser 1 micron, la fonction recherchée étant aussi une fonction de défragilisation.

Dans le cas de fibres en carbone et de matrice carbone, l'épaisseur de la deuxième couche d'interphase 36 peut atteindre voire dépasser 1 micron. La fonction de la deuxième couche d'interphase peut être d'améliorer la tenue à l'oxydation du matériau composite, auquel cas la deuxième couche d'interphase est de préférence en BN ou BC ou est sous forme séquencée en répétant n fois (n au moins égal à 2) la séquence BN/SiC ou BC/SiC.

### Exemple 1 (selon l'invention)

Une pièce en matériau composite a été réalisée de la façon suivante :
- utilisation d'une structure fibreuse multicouche formée de fibres en SiC fournies par la société japonaise Nippon Carbon sous la dénomination "Nicalon",
- formation par CVI d'une première couche d'interphase en PyC, d'épaisseur environ égale à 50 nm,
- imprégnation de la structure fibreuse par une résine polysiloxane en solution dans du méthyl-éthyl-cétone,
- séchage (sans pré-réticulation),
- réalisation d'une préforme fibreuse par drapage de plusieurs strates de structure fibreuse imprégnée sur un support et habillage par une poche à vide,
- réticulation sous vide de la résine dans l'outillage formé par le support et la poche à vide, pour obtenir une préforme consolidée,
- retrait de la préforme consolidée hors de l'outillage et pyrolyse de la résine à environ 1000°C, la pyrolyse étant réalisée dans un four de densification CVI dans lequel sont enchaînées les étapes suivantes,
- formation par CVI d'une deuxième couche d'interphase en BC, d'épaisseur d'environ égale à 200 nm, et
- densification par une matrice céramique autocicatrisante de type Si-B-C obtenue par CVI.

### Exemple 2 (comparatif)

On a procédé comme dans l'exemple 1 mais sans former de deuxième couche d'interphase.

### Exemple 3 (comparatif)

On a procédé dans l'exemple 1 mais avec une première couche d'interphase ayant une épaisseur d'environ 150 nm et sans former de deuxième couche d'interphase.

Dans l'exemple 1, il a été vérifié que la structure fibreuse après imprégnation présente une bonne capacité de déformation, même si cette capacité n'a pas ici été exploitée pour pouvoir effectuer une comparaison avec l'exemple 3.

Des échantillons de pièces en matériau composite obtenues selon les exemples 1, 2 et 3 ont été soumis à des essais en traction.

Les courbes I, II et III de la figure 3 montre la relation entre la contrainte appliquée σ et l'allongement relatif ε mesurés, jusqu'à rupture.

On constate que les matériaux des exemples I et III ont sensiblement un même comportement mécanique tandis que celui de l'exemple II est particulièrement fragile.

Ainsi, tout en préservant la possibilité de réaliser des préformes fibreuses pour des pièces en matériau composite de forme complexe en utilisant la consolidation par voie liquide, le procédé selon l'invention permet de préserver un comportement non fragile du matériau

## Revendications

1. Procédé de fabrication d'une pièce en matériau composite thermostructural comprenant les étapes successives suivantes :
- formation par infiltration chimique en phase gazeuse d'une première couche d'interphase continue sur les fibres d'une structure fibreuse en fibres réfractaires, la première couche d'interphase ayant une épaisseur au plus égale à 100 nanomètres,
- formation d'une préforme fibreuse consolidée par mise en forme de la structure fibreuse munie de la première couche d'interphase et imprégnée par une composition de consolidation comportant une résine précurseur de carbone ou céramique, et réticulation de la résine,
- transformation par pyrolyse de la résine en un résidu solide discontinu formé de grains en carbone ou céramique,
- formation ensuite par infiltration chimique en phase gazeuse d'une deuxième couche d'interphase continue recouvrant la première couche d'interphase et les grains de résidu solide de pyrolyse, et
- densification ensuite de la préforme par une matrice réfractaire.

2. Procédé selon la revendication 1, **caractérisé en ce que** la première couche de l'interphase est en un matériau choisi parmi le carbone pyrolytique, le nitrure de bore et le carbone dopé au bore.

3. Procédé selon l'une quelconque des revendications 1 et 2, **caractérisé en ce que** le matériau de la deuxième couche de l'interphase est choisi parmi le carbone pyrolytique, le nitrure de bore, le carbone dopé au bore et un matériau formé de couches en carbone pyrolytique, nitrure de bore ou carbone dopé au bore alternant avec des couches de carbure de silicium.

4. Procédé selon l'une quelconque des revendications 1 à 3, **caractérisé en ce que** la première couche de l'interphase a une épaisseur au plus égale à 50 nanomètres.

5. Procédé selon l'une quelconque des revendications 1 à 4, **caractérisé en ce que** la première couche de l'interphase a une épaisseur au moins égale à 10 nanomètres.

6. Procédé selon l'une quelconque des revendications 1 à 5, **caractérisé en ce que** la deuxième couche de l'interphase a une épaisseur au moins égale à 100 nanomètres.

7. Procédé selon l'une quelconque des revendications 1 à 6, **caractérisé en ce que** la transformation par pyrolyse en résidu solide carbone ou céramique et la formation de la deuxième couche de l'interphase sont réalisées de façon enchaînée dans un four.

8. Pièce en matériau composite thermostructural comportant un renfort fibreux en fibres réfractaires densifié par une matrice réfractaire obtenue par infiltration chimique en phase gazeuse avec interposition d'une interphase entre les fibres du renfort fibreux et la matrice,
**caractérisé en ce que** l'interphase comprend une première couche d'interphase continue revêtant les fibres du renfort fibreux et ayant une épaisseur au plus égale à 100 nanomètres et une deuxième couche d'interphase continue, la deuxième couche d'interphase recouvrant directement la première couche d'interphase et des grains de résidu solide discontinu de pyrolyse de résine en carbone ou céramique interposés entre la première et la deuxième couche d'interphase.

9. Pièce selon la revendication 8, **caractérisée en ce que** la première couche d'interphase est un matériau choisi parmi le carbone pyrolytique, le nitrure de bore et le carbone dopé au bore.

10. Pièce selon l'une quelconque des revendications 8 et 9, **caractérisée en ce que** le matériau de la deuxième couche de l'interphase est choisi parmi le carbone pyrolytique, le nitrure de bore, le carbone dopé au bore et un matériau formé de couches en carbone pyrolytique, nitrure de bore ou carbone dopé au bore alternant avec des couches de carbure de silicium.

11. Pièce selon l'une quelconque des revendications 8 à 10, **caractérisée en ce que** la première couche d'interphase a une épaisseur au plus égale à 50 nanomètres.

12. Pièce selon l'une quelconque des revendications 8 à 11, **caractérisée en ce que** la première couche d'interphase a une épaisseur au moins égale à 10 nanomètres.

13. Pièce selon l'une quelconque des revendications 8 à 12, **caractérisée en ce que** la deuxième couche d'interphase a une épaisseur au moins égale à 100 nanomètres.

14. Pièce selon l'une quelconque des revendications 8 à 13, **caractérisée en ce que** les grains de résidu solide de pyrolyse de résine et la matrice sont en céramique.

## Claims

1. A method of fabricating a thermostructural composite material part, the method comprising the following successive steps:
· using chemical vapor infiltration to form a first continuous interphase layer on the fibers of a fiber structure made of refractory fibers, the first interphase layer having a thickness of no more than 100 nanometers;
· forming a consolidated fiber preform by shaping the fiber structure with the first interphase layer and impregnated with a consolidation composition that includes a carbon or ceramic precursor resin, and curing the resin;
· transforming the resin by pyrolysis into a discontinuous solid residue formed by grains of carbon or ceramic;
· then using chemical vapor infiltration to form a second continuous interphase layer covering the first interphase layer and the solid pyrolysis residue grains; and
· then densifying the preform with a refractory matrix.

2. A method according to claim 1, **characterized in that** the first interphase layer is made of a material selected from pyrolytic carbon, boron nitride, and boron-doped carbon.

3. A method according to claim 1 or claim 2, **characterized in that** the material of the second interphase layer is selected from pyrolytic carbon, boron nitride, boron-doped carbon, and a material made up of layers of pyrolytic carbon, boron nitride, or boron-doped carbon alternating with layers of silicon carbide.

4. A method according to any one of claims 1 to 3, **characterized in that** the first interphase layer has thickness of no more than 50 nanometers.

5. A method according to any one of claims 1 to 4, **characterized in that** the first interphase layer has thickness of at least 10 nanometers.

6. A method according to any one of claims 1 to 5, **characterized in that** the second interphase layer has a thickness of at least 100 nanometers.

7. A method according to any one of claims 1 to 6, **characterized in that** the operations of transformation into a solid residue of carbon or ceramic by pyrolysis, and of forming the second interphase layer are performed one after the other in an oven.

8. A thermostructural composite material part comprising fiber reinforcement of refractory fibers densified by a refractory matrix obtained by chemical vapor infiltration, with an interphase being interposed between the fibers of the fiber reinforcement and the matrix, the part being **characterized in that** the interphase comprises a first continuous interphase layer coating the fibers of the fiber reinforcement and having a thickness of not more than 100 nanometers, and a second continuous interphase layer, the second interphase layer directly covering the first interphase layer and discontinuous grains of the solid residue that results from pyrolyzing the resin to form carbon or ceramic, which grains are interposed between the first and second interphase layers.

9. A part according to claim 8, **characterized in that** the first interphase layer is of a material selected from pyrolytic carbon, boron nitride, and boron-doped carbon.

10. A part according to claim 8 or claim 9, **characterized in that** the second interphase layer is selected from pyrolytic carbon, boron nitride, boron-doped carbon, and a material made up of layers of pyrolytic carbon, boron nitride, or boron-doped carbon alternating with layers of silicon carbide.

11. A part according to any one of claims 8 to 10, **characterized in that** the first interphase layer has a thickness of not more than 50 nanometers.

12. A part according to any one of claims 8 to 11, **characterized in that** the first interphase layer has a thickness of not less than 10 nanometers.

13. A part according to any one of claims 8 to 12, **characterized in that** the second interphase layer has a thickness of not less than 100 nanometers.

14. A part according to any one of claims 8 to 13, **characterized in that** the matrix and the grains of solid residue of pyrolyzing resin are made of ceramic.

## Patentansprüche

1. Verfahren zur Herstellung eines Teils aus hochtemperaturbeständigem Verbundwerkstoff, umfassend die folgenden aufeinanderfolgenden Schritte:
- Ausbilden einer kontinuierlichen ersten Zwischenphasenschicht mittels chemischer Gasphaseninfiltration auf den Fasern einer Faserstruktur aus feuerfesten Fasern, wobei die erste Zwischenphasenschicht eine Dicke von höchstens gleich 100 Nanometern aufweist,
- Ausbilden eines verfestigten Faservorformlings durch Informbringen der Faserstruktur, die mit der ersten Zwischenphasenschicht versehen und mit einer Verfestigungszusammensetzung, welche ein Kohlenstoff- oder Keramik-Vorläuferharz umfaßt, imprägniert ist, und Vernetzen des Harzes,
- Umwandeln des Harzes mittels Pyrolyse in einen diskontinuierlichen festen Rückstand, der von Kohlenstoff- oder Keramikkörnern gebildet ist,
- anschließendes Ausbilden einer kontinuierlichen zweiten Zwischenphasenschicht durch chemische Gasphaseninfiltration, welche die erste Zwischenphasenschicht und die Körner des festen Pyrolyserückstands bedeckt, und
- anschließendes Verdichten des Vorformlings durch eine feuerfeste Matrix.

2. Verfahren nach Anspruch 1, **dadurch gekennzeichnet, daß** die erste Schicht der Zwischenphase aus einem Material besteht, das aus pyrolytischem Kohlenstoff, Bornitrid und mit Bor dotiertem Kohlenstoff ausgewählt ist.

3. Verfahren nach einem der Ansprüche 1 und 2, **dadurch gekennzeichnet, daß** das Material der zweiten Schicht der Zwischenphase aus pyrolytischem Kohlenstoff, Bornitrid, mit Bor dotiertem Kohlenstoff und einem Material, das von Schichten aus pyrolytischem Kohlenstoff, Bornitrid oder mit Bor dotiertem Kohlenstoff, die mit Schichten aus Siliziumcarbid abwechseln, gebildet ist, ausgewählt ist.

4. Verfahren nach einem der Ansprüche 1 bis 3, **dadurch gekennzeichnet, daß** die erste Schicht der Zwischenphase eine Dicke von höchstens gleich 50 Nanometern aufweist.

5. Verfahren nach einem der Ansprüche 1 bis 4, **dadurch gekennzeichnet, daß** die erste Schicht der Zwischenphase eine Dicke von wenigstens gleich 10 Nanometern aufweist.

6. Verfahren nach einem der Ansprüche 1 bis 5, **dadurch gekennzeichnet, daß** die zweite Schicht der Zwischenphase eine Dicke von wenigstens gleich 100 Nanometern aufweist.

7. Verfahren nach einem der Ansprüche 1 bis 6, **dadurch gekennzeichnet, daß** die Umwandlung mittels Pyrolyse in festen Kohlenstoff- oder Keramikrückstand und das Ausbilden der zweiten Schicht der Zwischenphase in einem Ofen aufeinanderfolgend durchgeführt werden.

8. Teil aus hochtemperaturbeständigem Verbundwerkstoff, umfassend eine Faserverstärkung aus feuerfesten Fasern, die durch eine mittels chemischer Gasphaseninfiltration erhaltene feuerfeste Matrix unter Einfügen einer Zwischenphase zwischen den Fasern der Faserverstärkung und der Matrix verdichtet ist,
**dadurch gekennzeichnet, daß** die Zwischenphase eine kontinuierliche erste Zwischenphasenschicht, welche die Fasern der Faserverstärkung überzieht und eine Dicke von höchstens gleich 100 Nanometern aufweist, sowie eine kontinuierliche zweite Zwischenphasenschicht umfaßt, wobei die zweite Zwischenphasenschicht direkt die erste Zwischenphasenschicht und Kohlenstoff- oder Keramikkörner des diskontinuierlichen festen Rückstands der Harz-Pyrolyse, die zwischen der ersten und der zweiten Zwischenphasenschicht eingefügt sind, bedeckt.

9. Teil nach Anspruch 8, **dadurch gekennzeichnet, daß** die erste Zwischenphasenschicht ein Material ist, das aus pyrolytischem Kohlenstoff, Bornitrid und mit Bor dotiertem Kohlenstoff ausgewählt ist.

10. Teil nach einem der Ansprüche 8 und 9, **dadurch gekennzeichnet, daß** das Material der zweiten Schicht der Zwischenphase aus pyrolytischem Kohlenstoff, Bornitrid, mit Bor dotiertem Kohlenstoff und einem Material, das von Schichten aus pyrolytischem Kohlenstoff, Bornitrid oder mit Bor dotiertem Kohlenstoff, die mit Schichten aus Siliziumcarbid abwechseln, gebildet ist, ausgewählt ist.

11. Teil nach einem der Ansprüche 8 bis 10, **dadurch gekennzeichnet, daß** die erste Zwischenphasenschicht eine Dicke von höchstens gleich 50 Nanometern aufweist.

12. Teil nach einem der Ansprüche 8 bis 11, **dadurch gekennzeichnet, daß** die erste Zwischenphasenschicht eine Dicke von wenigstens gleich 10 Nanometern aufweist.

13. Teil nach einem der Ansprüche 8 bis 12, **dadurch gekennzeichnet, daß** die zweite Zwischenphasenschicht eine Dicke von wenigstens gleich 100 Nanometern aufweist.

14. Teil nach einem der Ansprüche 8 bis 13, **dadurch gekennzeichnet, daß** die Körner des festen Rückstands der Harz-Pyrolyse und die Matrix aus Keramik bestehen.
